# FASCICULE DE BREVET EUROPEEN

(11) **EP 1 077 567 B1**
(45) Date de publication et mention de la délivrance du brevet: **19.10.2005**
(21) Numéro de dépôt: 00402177.0
(22) Date de dépôt: 28.07.2000
(51) Int. Cl.: H04M 7/00, H04Q 7/22, H04M 1/247

(54) **Procédé d'établissement d'une communication entre deux installations téléphoniques à travers un réseau informatique par messages SMS**
Verfahren zur Herstellung einer Kommunikationsverbindungs zwischen zwei Telefonanlagen über einen Datennetzwerk unter Verwendung von SMS Nachrichen
Method for establishing a connection between two telephone installations via a data network using SMS messages

(30) Priorité: 18.08.1999 FR 9910596
(43) Date de publication de la demande: 21.02.2001
(73) Titulaire: Sagem SA, 75116 Paris (FR)
(72) Inventeur: Charbonnier, Philippe, 78600 Le Mesnil Le Roi (FR)
(74) Mandataire: Bloch, Gérard

(56) Documents cités:
- EP-A- 0 869 688
- WO-A-99/12365
- WO-A-99/34587
- FR-A- 2 753 862

## Description

Un réseau informatique tel que l'Internet permet à des installations téléphoniques (téléphones, télécopieurs, etc.), dotées de capacités appropriées, de communiquer entre elles.

Pour établir une communication Internet entre deux installations téléphoniques, celles-ci se connectent à leurs fournisseurs respectifs d'accès à l'Internet, généralement par connexion téléphonique, obtiennent chacune une adresse informatique provisoire, ou adresse "IP" (Internet Protocol - protocole Internet), s'échangent leurs adresses IP respectives et peuvent, dès lors, communiquer l'une avec l'autre, à travers l'Internet.

Les adresses IP, provisoires, changent généralement à chaque nouvelle connexion à l'Internet. Il en résulte qu'après avoir obtenu leurs adresses IP respectives, les installations doivent se les échanger, tout en restant connectées à l'Internet, ce qui s'avère problématique. De telles installations sont décrites dans les documents WO-A-99/12365 et FR - A - 2 753 862.

La présente invention propose une solution à ce problème.

A cet effet, l'invention concerne un procédé d'établissement d'une communication entre une première et une seconde installations téléphoniques à travers un réseau informatique, dans lequel chaque installation se connecte au réseau informatique, à travers un premier réseau téléphonique, obtient une adresse informatique provisoire et les deux installations s'échangent leurs adresses respectives, procédé caractérisé par le fait que la première installation transmet son adresse informatique à la seconde installation à travers un deuxième réseau téléphonique, autre que le premier réseau par lequel elle est connectée au réseau informatique, tout en restant connectée audit réseau informatique.

La première installation se connecte ainsi au réseau informatique à travers un premier réseau téléphonique, obtient une adresse informatique puis, tout en restant connectée au réseau informatique, transmet son adresse informatique à la seconde installation à travers un second réseau téléphonique.

Avantageusement, la première installation transmet son adresse informatique à la seconde installation à travers un réseau téléphonique cellulaire.

Dans ce cas, la première installation peut transmettre son adresse à la deuxième installation par un message SMS.

Avantageusement encore, la première installation se connecte au réseau informatique à travers un réseau de téléphonie fixe.

D'emblée, on notera que, par opposition à un réseau de téléphonie mobile, un réseau de téléphonie fixe désigne un réseau téléphonique auquel des installations téléphoniques d'utilisateur sont reliées par des liaisons filaires, l'installation pouvant comporter des liaisons locales radio. Il s'agit par exemple du réseau RTC (Réseau Téléphonique Commuté) avec liaison locale radio DECT. Un réseau de ce type offre généralement un meilleur débit de données qu'un réseau de téléphonie mobile, de type GSM par exemple.

Dans un mode de réalisation particulier, la première installation comprenant un téléphone mobile du réseau cellulaire et une base téléphonique radio du réseau de téléphonie fixe, reliés l'un à l'autre par liaison radio, le téléphone mobile émet vers la base des données de remplissage, afin de maintenir entre eux la liaison radio, pendant l'établissement de la communication entre les deux installations.

Avantageusement, durant une fenêtre temporelle, le téléphone mobile cesse d'émettre des données de remplissage pour émettre l'adresse informatique de la première installation vers la seconde -installation, la base tolérant le silence du téléphone sans interrompre la liaison radio avec lui.

L'invention sera mieux comprise à l'aide de la description suivante d'un mode de réalisation particulier du procédé d'établissement d'une communication à travers l'Internet entre deux installations téléphoniques, selon l'invention, en référence au dessin annexé sur lequel:

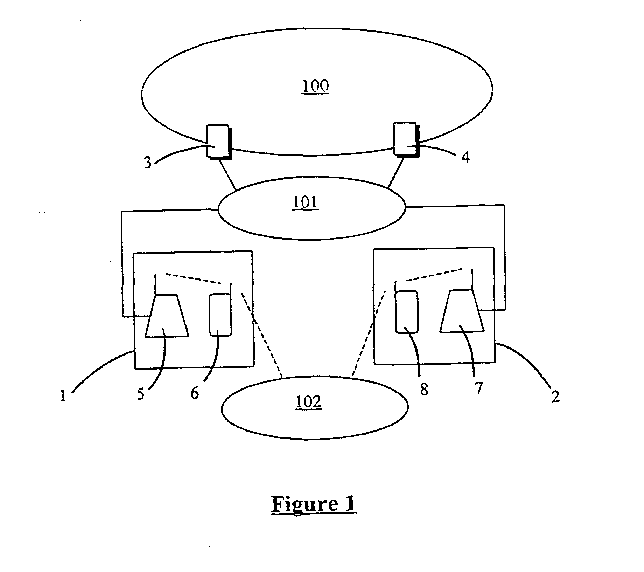

- la figure 1 représente une vue schématique des deux installations téléphoniques, reliées à l'Internet, et
- la figure 2 représente un schéma des différentes étapes du procédé.

Le procédé de l'invention permet d'établir une communication entre deux installations téléphoniques 1, 2 à travers un réseau informatique, ici l'Internet.

Dans l'exemple particulier de la description, chaque installation téléphonique 1 (2) est reliée à deux réseaux téléphoniques distincts, en l'espèce un réseau de téléphonie fixe, ou filaire, ici le réseau RTC (réseau téléphonique commuté) 101, et un réseau de téléphonie mobile 102, ou cellulaire, ici GSM.

Chaque installation 1 (2) dispose d'un accès à l'Internet 100, fourni par un serveur 3 (4) de l'Internet 100, ainsi que d'un numéro d'appel téléphonique sur le réseau GSM 102 et d'un numéro d'appel téléphonique sur le réseau RTC 101, que l'on appellera par la suite "numéro GSM" et "numéro RTC", respectivement.

Par souci de clarté, l'une seule des installations 1, 2, ici toutes deux identiques, va maintenant être décrite.

L'installation 1 (2) comprend une base téléphonique radio 5 (7), ici de la norme DECT, et un téléphone mobile 6 (8) "bi-mode", agencé pour fonctionner en mode GSM et en mode DECT.

La base radio 5 est une base DECT standard, reliée au réseau RTC 101 par liaison filaire. Elle est agencée pour s'apparier, par liaison radio, avec des combinés radio DECT, non représentés, et pour communiquer avec eux suivant le protocole de communication DECT.

Le téléphone mobile 6 est un téléphone cellulaire GSM intégrant, outre les éléments standards d'un téléphone GSM, un module de combiné radio DECT, un bloc automate de mise en communication à travers l'Internet 100, un bloc de connexion Internet, un bloc de téléphonie Internet, une touche d'appel "DECT", une touche d'appel "GSM" et une touche "Internet".

Le module de combiné radio DECT permet au téléphone 6 de faire fonction de combiné radio DECT, lorsqu'il se trouve dans la zone de couverture de la base 5.

Le téléphone 6 est agencé pour pouvoir fonctionner simultanément dans les deux modes DECT et GSM.

En variante, le réseau local DECT peut être remplacé par un réseau ou système de téléphonie sans fil CTS utilisant les fréquences et le protocole du réseau GSM. Un tel réseau CTS serait cependant, tout comme le réseau DECT, un réseau indépendant et distinct du réseau public GSM.

Le bloc automate de mise en communication à travers l'Internet 100 est destiné à commander l'exécution automatique (c'est-à-dire sans l'intervention d'un utilisateur) d'étapes, explicitées plus loin, tendant à l'établissement une communication téléphonique à travers l'Internet 100.

La touche "Internet" permet de commander l'établissement d'une communication téléphonique à travers l'Internet 100, comme décrit plus loin.

Le bloc de connexion Internet comprend une application de connexion à l'Internet 100, par connexion téléphonique au serveur fournisseur d'accès 3.

Le bloc de téléphonie Internet comprend une application de téléphonie sur l'Internet permettant au téléphone 6 de téléphoner à travers l'Internet 100.

La touche d'appel "DECT" et la touche d'appel "GSM" permettent respectivement lancer des appels à travers le réseau RTC 101, via la base DECT 5, et à travers le réseau GSM 102.

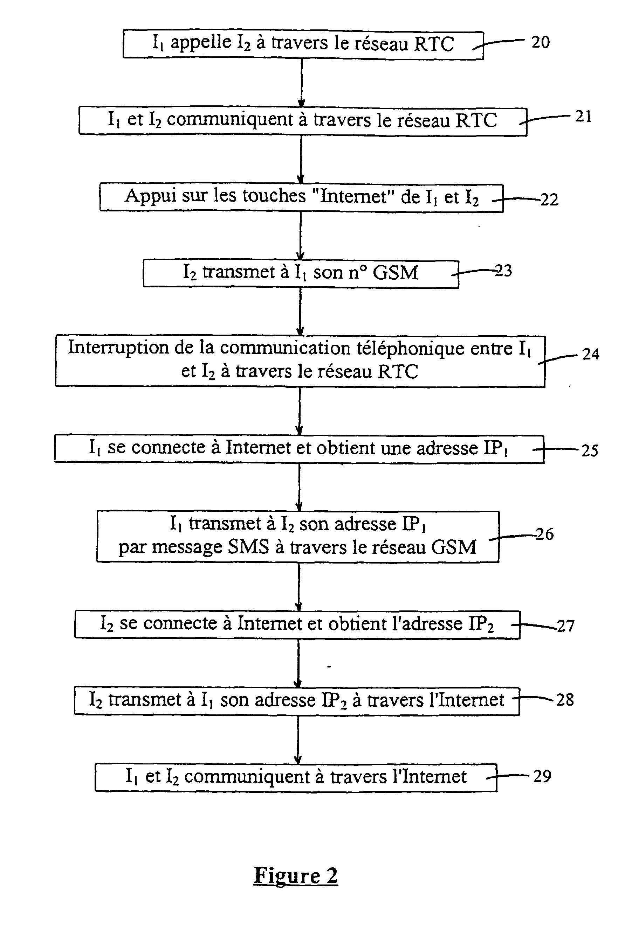

Le procédé d'établissement d'une communication entre les installations 1 et 2, à travers l'Internet 100, va maintenant être explicité. On notera ici que, sur la figure 2, "I₁" et "I₂" représentent respectivement les installations 1 et 2.

Les téléphones mobiles 6, 8 sont appariés, et donc reliés par liaison radio, à leurs bases DECT respectives 5, 7, et fonctionnent simultanément en mode DECT et en mode GSM.

Un utilisateur de l'installation 1 saisit le numéro RTC de l'installation 2, à l'aide du clavier téléphonique du téléphone mobile 6, et appuie sur la touche d'appel "DECT". L'installation 1 appelle alors l'installation 2 à travers le réseau RTC 101 (étape 20).

A la réception de l'appel, un utilisateur de l'installation 2 décroche. Les deux utilisateurs dialoguent à travers le réseau RTC 101 (étape 21) et décident de poursuivre cette communication téléphonique à travers l'Internet 100. Ils appuient alors sur la touche "Internet" du clavier de leur téléphone mobile 6 (8) (étape 22), en déclenchant ainsi l'exécution automatique des étapes suivantes, effectuées par les téléphones 6 et 8, sous la commande de leurs blocs automates de mise en communication à travers l'Internet 100.

L'une des deux installations, ici l'installation 2, transmet son numéro GSM à l'autre installation 1, à travers le réseau RTC 101, (étape 23) puis les installations 1, 2 raccrochent en interrompant la communication téléphonique à travers le réseau RTC 101 (étape 24).

L'installation 1 se connecte à l'Internet 100, par connexion téléphonique au serveur fournisseur d'accès 3 à travers le réseau RTC 101, et obtient une adresse IP₁ provisoire (étape 25).

On rappelle ici qu'une adresse IP est une adresse informatique sur l'Internet 100, qui peut être fixe ou dynamique. En l'espèce, les adresses IP des installations 1, 2 sont dynamiques, ou provisoires, et changent à chaque nouvelle connexion à l'Internet 100.

Le téléphone 6 de l'installation 1 prépare ensuite un message SMS (Short Message Service - Service de message court) de notification d'adresse IP, y insère l'adresse IP₁, et l'émet vers l'installation 2, à travers le réseau GSM 102 (étape 26), tout en restant connecté à l'Internet 100 à travers le réseau RTC 101.

L'installation 2 reçoit le message SMS de notification d'adresse IP, en extrait l'adresse IP₁, puis se connecte à l'Internet 100, par connexion téléphonique à son serveur fournisseur d'accès 4 ici à travers le réseau RTC 101, et obtient une adresse IP₂ provisoire (étape 27). L'installation 2 émet ensuite vers l'installation 1, à travers l'Internet 100, des premiers paquets de données véhiculant l'adresse IP₂ (étape 28).

L'installation 1 reçoit les premiers paquets de données, émis par l'installation 2, et en extrait l'adresse IP₂.

Les installations 1 et 2, connaissant leurs adresses IP mutuelles, peuvent, dès lors, communiquer l'une avec l'autre à travers l'Internet 100. Elles émettent alors chacune un signal sonore d'avertissement pour indiquer à leurs utilisateurs que la communication téléphonique à travers l'Internet 100 peut débuter.

Durant la communication téléphonique à travers l'Internet 100 (étape 29), les installations 1 et 2 se transmettent des paquets de données à travers l'Internet 100, suivant les protocoles standards TCP/IP. La transmission de paquets de données de l'une des installations 1 (2), émettrice, à l'autre installation 2 (1), réceptrice, se déroule de la façon suivante: l'installation émettrice 1 (2) émet les paquets de données vers son serveur fournisseur d'accès 3 (4), à travers le réseau téléphonique RTC 101, les paquets de données sont ensuite acheminés à travers l'Internet 100 jusqu'au serveur fournisseur d'accès 4 (3) de l'installation réceptrice 2 (1), qui les retransmet vers celle-ci, à travers le réseau téléphonique RTC 101.

Comme indiqué plus haut, chaque téléphone mobile 6 et 8 peut fonctionner simultanément en mode DECT et en mode GSM. Cependant, les émissions radio de l'un quelconque des deux circuits émetteurs correspondants du téléphone mobile 6 (8) sont susceptibles de saturer, ou éblouir, le circuit récepteur, très proche, de ce même téléphone mobile 6 (8) relatif à l'autre réseau, GSM par exemple.

Pour éviter de telles perturbations, le téléphone 6, relié à son serveur 3 à travers la base DECT 5, et en attente de connexion avec l'installation 2, n'émet vers ce serveur 3, par l'intermédiaire de la base 5, que des données de remplissage, en nombre minimal pour ne représenter que peu d'énergie rayonnée, mais cependant en quantité suffisante de données pour éviter une coupure de la liaison DECT et ainsi rester "accroché" à la base DECT 5. Toutefois, le téléphone mobile 6 cesse d'émettre ces données de remplissage pour émettre le message SMS de notification de l'adresse IP₁, pendant une fenêtre temporelle. Le protocole de communication DECT est adapté pour que, durant cette fenêtre temporelle, la base 5 tolère le silence du téléphone 6, sans interrompre la liaison radio avec lui, et le téléphone 6 garde la synchronisation DECT, en maintenant active une base de temps DECT à faible dérive.

Pendant l'établissement de la communication entre les installations 1 et 2, après sa connexion à l'Internet 100, l'installation 1 émet vers le serveur 3 des données de remplissage. Grâce à cela, elle maintient la connexion Internet avec le serveur 3, qui serait interrompue en cas de silence prolongé de l'installation 1.

Dans la description qui précède, l'installation 2 transmet à l'installation 1 son numéro GSM de façon automatique. En variante, on pourrait prévoir que l'utilisateur de l'installation 1, après avoir appuyé sur la touche "Internet", saisisse lui-même le numéro GSM de l'installation 2 à l'aide du clavier du téléphone 6.

L'installation 2 pourrait tout aussi bien transmettre son numéro GSM à l'installation 1, à travers le réseau GSM 102.

Enfin, le protocole de communication DECT de l'installation 1 pourrait être adapté pour que, à l'issue de la fenêtre temporelle, pendant laquelle le téléphone 6 émet le message SMS de notification de l'adresse IP₁, le téléphone 6 refasse automatiquement l'acquisition de la synchronisation DECT sur la base 5, au lieu de garder la synchronisation DECT pendant la fenêtre temporelle.

Dans un deuxième mode réalisation de l'invention, l'installation 1 comporte un répertoire de correspondants, intégré dans le téléphone 6, contenant, pour chaque correspondant, un identifiant, au moins un numéro d'appel téléphonique et, le cas échéant, l'indication selon laquelle le correspondant a des capacités pour téléphoner à travers l'Internet 100. L'installation 2 est répertoriée dans le répertoire de l'installation 1, avec ses numéros GSM et DECT et l'indication selon laquelle elle a des capacités de téléphonie Internet.

Pour téléphoner à l'installation 2, l'utilisateur de l'installation 1 sélectionne l'identifiant de l'installation 2 dans le répertoire de correspondants, à l'aide de l'interface homme-machine du téléphone 6 et lance l'appel par appui sur une touche d'appel. Le répertoire du téléphone 6 indiquant que l'installation 2 a des capacités de téléphonie Internet, l'installation 1 se connecte automatiquement à l'Internet 100, par connexion téléphonique au serveur 3 à travers le réseau RTC 101, et obtient une adresse IP₁. Elle prépare ensuite un message SMS, constituant une requête, d'invitation à communiquer à travers l'Internet 100, y insère son adresse IP₁, et le transmet à l'installation 2, à travers le réseau GSM 102. En outre, la première installation 1 peut aussi transmettre, dans le message SMS, un numéro d'appel téléphonique de la seconde installation 2 dans un réseau téléphonique local, c'est-à-dire par exemple un numéro de poste supplémentaire d'un autocommutateur auquel est rattachée la seconde installation 2, qui est ainsi directement atteinte par sélection directe à l'arrivée. L'installation 2 reçoit le message SMS. De façon automatique, elle reconnaît qu'il s'agit d'un message SMS d'invitation à communiquer à travers l'Internet 100, en extrait l'adresse IP₁, puis se connecte à son tour à l'Internet 100, par connexion téléphonique au serveur 4 à travers le réseau RTC 101, obtient une adresse IP₂ et transmet à l'installation 1, à travers l'Internet 100, des premiers paquets de données, véhiculant l'adresse IP₂.

Au lieu d'utiliser le répertoire de correspondants contenant le numéro de la deuxième installation 2 dans le réseau GSM 102 pour appeler la seconde installation 2 par consultation de ce répertoire comme expliqué ci-dessus, l'utilisateur de l'installation 1 pourrait saisir le numéro GSM de l'installation 2 et appuyer sur la touche "Internet" pour déclencher la connexion à l'Internet 100 de l'installation 1 et l'émission vers l'installation 2 d'un message SMS contenant l'adresse IP₁ de l'installation 1, comme explicité ci-dessus.

En variante, avant de se connecter à l'Internet 100, l'installation 1 émet vers l'installation 2 une requête pour communiquer à travers l'Internet 100, par laquelle l'installation 1 demande à l'installation 2 si elle souhaite communiquer avec elle à travers l'Internet 100. Cette requête peut par exemple être transmise à travers le réseau GSM 102, par un message SMS, ou bien à travers le réseau RTC 101. Après réception de cette requête, et en cas d'acceptation, l'installation 2 se connecte automatiquement à l'Internet 100, par connexion téléphonique au serveur 4 à travers le réseau RTC 101, obtient une adresse IP₂, l'insère dans un message SMS de notification d'adresse IP et transmet ce message à l'installation 1, à travers le réseau GSM 102. L'installation 2 reçoit le message SMS, en extrait l'adresse IP₂, puis se connecte à son tour à l'Internet 100, par connexion téléphonique au serveur 3 à travers le réseau RTC 101, obtient une adresse IP₁ et émet vers l'installation 2 des premiers paquets de données véhiculant l'adresse IP₁.

Les blocs automates de mise en communication à travers l'Internet 100 des installations téléphoniques 1 et 2 sont adaptés pour mettre en oeuvre les différents modes de réalisation du procédé de l'invention.

Les blocs automates de mise en communication à travers l'Internet pourraient être intégrés dans la base ou bien partagés par la base et le téléphone mobile.

Dans le cas où l'une des installations téléphoniques 1, 2 est reliée à deux réseaux téléphoniques d'accès à l'Internet 100, elle est alors, de préférence, agencée pour sélectionner, de façon automatique, celui de ces deux réseaux qui offre les meilleures prestations pour la connexion à l'Internet, eu égard à certains paramètres prédéfinis (coût de la communication, débit de données, accessibilité des réseaux compte tenu de la position géographique de l'installation, etc.).

## Revendications

1. Procédé d'établissement d'une communication entre une première et une seconde installations téléphoniques (1, 2) à travers un réseau informatique (100), dans lequel chaque installation (1, 2) se connecte au réseau informatique (100), à travers un premier réseau téléphonique (101, 102), obtient une adresse informatique provisoire et les deux installations (1, 2) s'échangent leurs adresses respectives, procédé **caractérisé par le fait que** la première installation (1, 2) transmet son adresse informatique à la seconde installation (1, 2) à travers un deuxième réseau téléphonique (102), autre que le premier réseau (101) par lequel elle est connectée au réseau informatique (100), tout en restant connectée audit réseau informatique (100).

2. Procédé selon la revendication 1, dans lequel la première installation (1) transmet son adresse informatique à la seconde installation (2) à travers un réseau téléphonique cellulaire (102).

3. Procédé selon la revendication 2, dans lequel la première installation (1) transmet son adresse à la seconde installation (102) par un message SMS.

4. Procédé selon l'une des revendications 1 à 3, dans lequel la première installation (1) se connecte au réseau informatique (100) à travers un réseau de téléphonie fixe (101).

5. Procédé selon la revendication 4, dans lequel, la première installation comprenant un téléphone mobile (6) du réseau cellulaire (102) et une base téléphonique radio (5) du réseau de téléphonie fixe (101), reliés l'un à l'autre par liaison radio, le téléphone mobile (6) émet vers la base (5) des données de remplissage, afin de maintenir entre eux la liaison radio, pendant l'établissement de la communication entre les deux installations (1, 2).

6. Procédé selon la revendication 5, dans lequel, durant une fenêtre temporelle, le téléphone mobile (6) cesse d'émettre des données de remplissage pour émettre l'adresse informatique de la première installation (1) vers la seconde installation (2), la base (5) tolérant le silence du téléphone (6) sans interrompre la liaison radio avec lui.

7. Procédé selon l'une des revendications 1 à 6, dans lequel, pendant l'établissement de la communication entre les deux installations (1, 2), la première installation (1) émet vers son fournisseur d'accès (3) des données de remplissage afin de maintenir sa connexion au réseau informatique (100).

8. Procédé selon l'une des revendications 1 à 7, dans lequel l'une des deux installations adresse à l'autre installation une requête pour communiquer à travers le réseau informatique, à travers l'un des réseaux téléphoniques.

9. Procédé selon l'une des revendications 1 à 8, dans lequel la seconde installation (2) transmet à la première installation (1) son numéro d'appel téléphonique sur ledit second réseau téléphonique (102), à travers l'un des réseaux téléphoniques (101, 102), pour que la première installation (1) transmette ultérieurement son adresse informatique vers ce numéro.

10. Procédé selon l'une des revendications 3 à 9, dans lequel la première installation (1) transmet, dans le message SMS, un numéro d'appel téléphonique de la seconde installation (2) dans un réseau téléphonique local.

11. Procédé selon l'une des revendications 2 à 10, dans lequel la première installation (1) appelle la seconde installation (2) par consultation d'un répertoire de correspondants du deuxième réseau téléphonique cellulaire (102).

## Patentansprüche

1. Verfahren zum Herstellen einer Verbindung zwischen einer ersten und einer zweiten Fernsprechanlage (1, 2) über ein Datennetz (100), wobei sich jede Anlage (1, 2) über ein erstes Fernsprechnetz (101, 102) mit dem Datennetz (100) verbindet, eine provisorische Datenadresse erhält, und die beiden Anlagen (1, 2) ihre jeweiligen Adressen austauschen,
**dadurch gekennzeichnet, dass**
die erste Anlage (1, 2) ihre Datenadresse über ein zweites Fernsprechnetz (102) an die zweite Anlage (1, 2) übermittelt, und nicht über das erste Netz (101), durch das sie mit dem Datennetz (100) verbunden ist, und gleichzeitig mit dem Datennetz (100) verbunden bleibt.

2. Verfahren nach Anspruch 1,
wobei die erste Anlage (1) ihre Datenadresse über ein Zellularfernsprechnetz (102) an die zweite Anlage (2) übermittelt.

3. Verfahren nach Anspruch 2,
wobei die erste Anlage (1) ihre Adresse durch eine SMS-Nachricht an die zweite Anlage (2) übermittelt.

4. Verfahren nach einem der Ansprüche 1 bis 3,
wobei die erste Anlage (1) sich über ein Fernsprechnetz (101) mit dem Datennetz (100) verbindet.

5. Verfahren nach Anspruch 4,
wobei die erste Anlage ein mobiles Fernsprechgerät (6) des Zellularnetzes (102) und eine Fernsprechfunkbasis (5) des Fernsprechfestnetzes (101) umfasst, die über eine Funkverbindung miteinander verbunden sind, wobei das mobile Fernsprechgerät (6) Fülldaten zur Basis (5) sendet, um die zwischen diesen bestehende Funkverbindung während der Herstellung der Verbindung zwischen den beiden Anlagen (1, 2) aufrecht zu erhalten.

6. Verfahren nach Anspruch 5,
wobei das mobile Fernsprechgerät (6) ein Zeitfenster lang damit aufhört, Fülldaten zu senden, um die Datenadresse der ersten Anlage (1) zur zweiten Anlage (2) zu senden, wobei die Basis (5) die Sendepause des Fernsprechgerätes (6) toleriert, ohne die Funkverbindung mit ihm zu unterbrechen.

7. Verfahren nach einem der Ansprüche 1 bis 6,
wobei während der Herstellung der Verbindung zwischen den beiden Anlagen (1, 2) die erste Anlage (1) Fülldaten zu ihrem Zugangs-Anbieter (3) sendet, um ihre Verbindung mit dem Datennetz (100) aufrecht zu erhalten.

8. Verfahren nach einem der Ansprüche 1 bis 7,
wobei die eine der beiden Anlagen an die andere Anlage eine Verbindungsanforderung richtet, um über eines der Fernsprechnetze über das Datennetz zu kommunizieren.

9. Verfahren nach einem der Ansprüche 1 bis 8,
wobei die zweite Anlage (2) an die erste Anlage (1) ihre Fernsprechrufnummer über eines der Fernsprechnetze (101, 102) auf das zweite Fernsprechnetz (102) übermittelt, damit die erste Anlage (1) anschließend ihre Datenadresse an diese Nummer übermittelt.

10. Verfahren nach einem der Ansprüche 3 bis 9,
wobei die erste Anlage (1) in der SMS-Nachricht eine Fernsprechrufnummer der zweiten Anlage (2) in einem lokalen Fernsprechnetz übermittelt.

11. Verfahren nach einem der Ansprüche 2 bis 10,
wobei die erste Anlage (1) die zweite Anlage (2) durch Abfrage eines Teilnehmerverzeichnisses des zweiten Zellularfernsprechnetzes (102) anruft.

## Claims

1. Method of establishing a communication between a first and a second telephone facility (1, 2) through a computer network (100), whereby each facility (1, 2) is connected to the computer network (100) through a first telephone network (101, 102), obtains a provisional computer address and the two facilities (1, 2) exchange their respective addresses, this method being **characterised in that** the first facility (1, 2) transmits its computer address to the second facility (1, 2) through a second telephone network (102), other than the first network (101) by which it is connected to the computer network (100), while remaining connected to the said computer network (100).

2. Method according to Claim 1, whereby the first facility (1) transmits its computer address to the second facility (2) through a cellular telephone network (102).

3. Method according to Claim 2, whereby the first facility (1) transmits its address to the second facility (102) by an SMS message.

4. Method according to one of the Claims 1 to 3, whereby the first facility (1) is connected to the computer network (100) through a fixed telephone network (101).

5. Method according to Claim 4, whereby, the first facility including a mobile telephone (6) of the cellular network (102) and a radio-telephone base (5) of the fixed telephone network (101), connected to each other by radio link, the mobile telephone (6) sends filling-up data to the base (5), in order to maintain the radio link between them, while the call is set up between the two facilities (1, 2).

6. Method according to Claim 5 whereby, during a time window, the mobile telephone (6) stops sending filling-up data in order to send the computer address of the first facility (1) to the second facility (2), with the base (5) tolerating the silence of the telephone (6) without breaking the radio link with it.

7. Method according to Claims 1 to 6 whereby, during the setting up of the communication between the two facilities (1, 2), the first facility (1) sends filling-up data to its access supplier (3) in order to maintain its connection to the computer network (100).

8. Method according to one of the Claims 1 to 7, whereby one of the two facilities sends a request to the other facility to communicate through the computer network, through one of the telephone networks.

9. Method according to one of the Claims 1 to 8, whereby the second facility (2) transmits to the first facility (1) its telephone call number on the said second telephone network (102), through one of the telephone networks (101, 102), so that the first facility (1) subsequently transmits its computer address to that number.

10. Method according to one of the Claims 3 to 9, whereby the first facility (1) transmits, in the SMS message, a telephone call number of the second facility (2) in a local telephone network.

11. Method according to one of the Claims 2 to 10, whereby the first facility (1) calls the second facility (2) by consulting a directory of correspondents in the second cellular telephone network (102).
